# EUROPÄISCHE PATENTSCHRIFT

(11) **EP 2 141 433 B1**
(45) Veröffentlichungstag und Bekanntmachung des Hinweises auf die Patenterteilung: **25.01.2012**
(21) Anmeldenummer: 09008021.9
(22) Anmeldetag: 19.06.2009
(51) Int. Cl.: F28D 20/00, F24H 9/12

(54) **Pufferspeicher in Form eines Warmwasser-Schichtenspeichers**
Hot water stratification buffer storage
Stockage de chaleur à stratification de l'eau

(30) Priorität: 02.07.2008 DE 102008030943
(43) Veröffentlichungstag der Anmeldung: 06.01.2010
(73) Patentinhaber: KIOTO Clear Energy AG, 9300 St. Veit an der Glan (AT)
(72) Erfinder: Stricker, Erwin, 7062 Sankt Margarethen Burgenland (AT); Pavicsics, Reinhard, 2443 Leithaprodensdorf (AT); Cecil, Harald, 2443 Leithaprodensdorf (AT); Kreiner, Thomas, 2443 Loretto (AT)
(74) Vertreter: Becker, Thomas

(56) Entgegenhaltungen:
- DE-A1- 10 049 278
- DE-A1- 19 731 351
- DE-C1- 10 025 318

## Beschreibung

Die Erfindung betrifft einen Pufferspeicher mit mehreren Zonen zur Speicherung von Wasser unterschiedlicher Temperatur.

Ein Pufferspeicher der gattungsgemäßen Art dient der Speicherung von Wasser im Rahmen einer Heizungsanlage und/oder einer Warmwasserversorgung.

Der Pufferspeicher dient dazu, Differenzen zwischen erzeugter und verbrauchter Wärmemenge auszugleichen und beispielsweise Leistungsschwankungen einer vorgeschalteten Solaranlage und/oder Wärmepumpe zu kompensieren.

Mit Hilfe des Pufferspeichers kann Warmwasser zum Beispiel aus einer Solaranlage in leistungsstarken Zeiten gespeichert und in leistungsärmeren Zeiten wieder abgenommen werden. Damit lässt sich die Wärmeerzeugung in gewissem Umfang unabhängig vom Verbrauch betreiben. Insgesamt wird auf diese Weise der Wirkungsgrad einer Heizungs- und/oder Warmwasseranlage verbessert.

Zur Reduzierung von Wärmeverlusten ist das Gehäuse von Pufferspeichern regelmäßig thermisch isoliert.

Es ist ebenso bekannt, einen Pufferspeicher in verschiedene Zonen zu unterteilen, um eine gewisse Temperaturschichtung zu erreichen, das heißt, in Vertikalrichtung Zonen mit Wasser unterschiedlicher Temperatur ausbilden zu können. Dabei werden die Zonen durch so genannte Schichtenbleche voneinander getrennt. Die Schichtenbleche können die Zonen vollständig voneinander trennen. Dann weist jede Zone mindestens einen eigenen Zu- und Ablauf für das Wasser auf. Die Schichtenbleche können aber auch Öffnungen frei lassen, so dass das Wasser von einer Zone in eine benachbarte Zone strömen kann. Dabei folgt die Strömungsrichtung der physikalischen Vorgabe, dass Wasser höherer Temperatur aufsteigt und Wasser geringerer Temperatur absinkt.

Bei solchen Pufferspeichern mit unterschiedlichen Temperaturzonen können innerhalb des Pufferspeichers Wasser führende Leitungen zur Be- und Entladung der verschiedenen Temperaturzonen durch zwei oder mehr Zonen des Pufferspeichers verlaufen.

Die DE 100 25 318 C1 offenbart einen Schichtspeicher (Pufferspeicher) für eine Heizanlage oder eine Warmwasserbereitungsanlage mit einem Primärsteigrohr (Fluidleitung) mit einer Mehrzahl von vertikal voneinander beabstandeten Gruppen von Austrittsöffnungen, wobei das Primärsteigrohr ein thermisch schlecht leitendes Material aufweist oder daraus gebildet ist.

Der Erfindung liegt die Aufgabe zugrunde, den Wirkungsgrad eines Pufferspeichers zu verbessern.

In systematischen Versuchen wurden die Temperaturen an unterschiedlichen Stellen innerhalb eines Pufferspeichers gemessen und die Messergebnisse ausgewertet. Dabei ergab sich Folgendes:

Bei einer Wasser-Eintrittstemperatur von ca. 50° C in die Stahl-Wasserleitung und einer Durchflussmenge von 0,3 1/min ergab sich bei einer Temperatur des Umgebungswassers von 18° C auf einer Strecke von 1,2 Metern ein Temperaturverlust von 18° C. Die Wassertemperatur im Inneren der Rohrleitung kann gegebenenfalls soweit abgekühlt werden, dass das über diese Rohrleitung in eine Zone eingespeiste Wasser kälter ist als die Umgebungstemperatur der Zone. Statt wie gewünscht, das Wasser dieser Zone über Warmwasserzufuhr aufzuheizen, würde es sogar gekühlt. Umgekehrt kann das durch die Rohrleitung durch eine Zone geführte Warmwasser das Wasser in dieser Zone auch unerwünscht erwärmen.

Aus dieser Erkenntnis heraus sieht die Erfindung in ihrer allgemeinsten Ausführungsform einen Pufferspeicher vor, der mit Zonen zur Speicherung von Wasser unterschiedlicher Temperatur ausgebildet ist, wobei mindestens eine Fluidleitung durch mindestens zwei Zonen des Pufferspeichers geführt und thermisch isoliert ist.

Durch eine thermische Isolierung der innerhalb des Pufferspeichers verlaufenden Fluidleitung kann der Wärmeverlust drastisch reduziert und damit der Wirkungsgrad des Pufferspeichers drastisch erhöht werden. Die thermische Energie des Fluids, meist Wasser, aber auch Gas, gelangt jetzt überwiegend dort hin, wo sie benötigt wird.

Üblicherweise besteht eine Fluidleitung der genannten Art aus Stahl. Eine solche Fluidleitung kann nunmehr innenseitig und/oder außenseitig thermisch isoliert sein. Erfindungsgemäß erfolgt die thermische Isolierung innenseitig.

Als Isoliermaterial eignen sich beispielsweise: EPDM (Ethylen-Propylen-Dien-Kautschuk), SBR (Styrol-Butadien-Copolymer), ChloroprenKautschuk, oder allgemein ausgedrückt, jedes Dämmmaterial, welches wasserbeständig ist, wobei geschlossenzelliges und flexibles Isoliermaterial, welches frei an Fluorkohlenwasserstoffen (FCKW) ist, bevorzugt wird.

Hierzu gehören auch geschäumte Kunststoffmaterialien wie Schaumpolystyrol oder andere Kautschuksorten.

Die Isolierung kann als monolithische Masse auf den Rohrkörper aufgebracht werden. Die Isolierung kann aber auch aus einem vorkonfektionierten Formteil bestehen. Beispielsweise wird ein entsprechender Isolierschlauch außenseitig auf die Wasserleitung aufgeschrumpft, aufgezogen und/oder aufgeklebt. Erfindung gemäβ erfolgt dies innenseitig

Bereits im Herstellungsverfahren können Rohrleitung und Isolierung gemeinsam konfektioniert werden.

Es ist ebenso möglich, die Rohrleitung ausschließlich aus einem thermisch isolierenden Werkstoff herzustellen, der insbesondere folgende thermische Isoliereigenschaften bei üblicher Wanddicke (0,5 - 5 cm) aufweist:

Das Material soll so ausgewählt werden, dass sich bei einer Durchflussmenge zwischen 0,1 und 51/min durch die Wasserleitung und einer Gesamtlänge der thermisch isolierten Wasserleitung im Pufferspeicher zwischen 1 und 2 m bei einer Temperaturdifferenz zur Umgebungs-temperatur von 30° C ein Temperaturverlust von maximal 5°C, maximal 4° C oder besser maximal 2° C ergibt.

Für einen Pufferspeicher mit 1.000 1 Inhalt, einer Wasserleitung aus Stahl mit einem Innen-Durchmesser von ca. 19 mm und einer Wandstärke von ca. 4 mm kann beispielsweise EPDM in entsprechender Materialstärke dieses Kriterium an das Isoliermaterial erfüllen.

Weitere Merkmale der Erfindung ergeben sich aus den Merkmalen der Unteransprüche sowie den sonstigen Anmeldungsunterlagen.

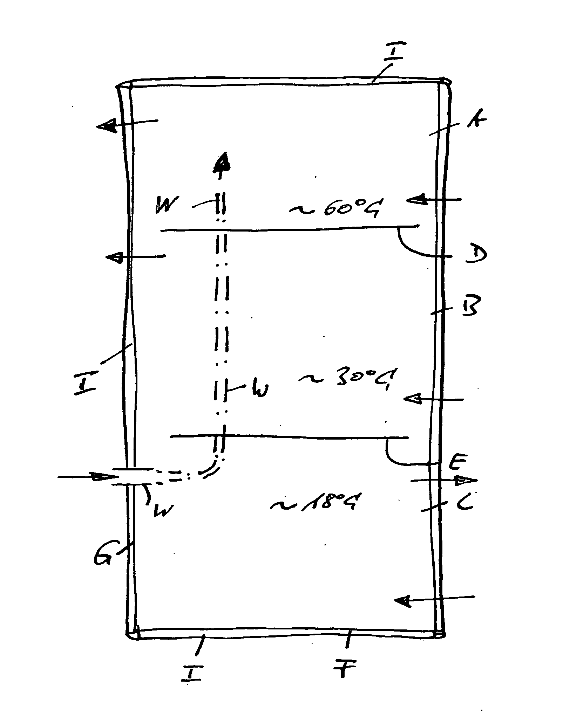

Die Erfindung wird nachstehend anhand eines Ausführungsbeispieles näher erläutert. Dabei zeigt die einzige Figur, schematisch, in einem Längsschnitt einen außen thermisch isolierten (Isolierung I) Pufferspeicher mit drei Zonen A, B, C, wobei in der untersten Zone C eine Temperatur von angenommen ca. 18° C, in der Zone B eine Temperatur von angenommen ca. 30° C und in der obersten Zone A eine mittlere Temperatur von angenommen ca. 60° C herrscht.

Die Zonen A, B sind durch ein Schichtenblech D und die Zonen B, C sind durch ein Schichtenblech E voneinander getrennt, wobei die Schichtenbleche D, E im Wesentlichen parallel zum Boden F des im Wesentlichen tonnenartigen (zylinderartigen) Pufferspeichers verlaufen, jedoch mit Abstand zur Wand G, um einen Übergang von Wasser aus einer Zone in eine benachbarte Zone zu ermöglichen.

Durch Pfeile sind schematisch Zu- und Abläufe zu den einzelnen Zonen A, B, C angedeutet.

Aus der Zone A verläuft eine Wasserleitung W durch das Schichtenblech D, die Zone B in die Zone C und von dort aus dem Pufferspeicher heraus.

Im dargestellten Ausführungsbeispiel hat die Wasserleitung einen Außendurchmesser von ca. 27 mm, einen Innendurchmesser von ca. 19 mm (3/4"), eine Wandstärke von ca. 4 mm, wobei innenseitig auf einen ca. 2 mm dicken Grundkörper aus Stahl ein 2 mm dicker Schlauch aus EPDM als Isolierung aufgeklebt ist.

Das mit ca. 70° C in die Wasserleitung W zugeführte Wasser wird in einer Menge von 0,5 1/min in der Zone C eingespeist, durchläuft die Zone C teilweise und die Zone B komplett und tritt in der Zone A oberhalb des Schichtenblechs D mit ca. 66° C aus. Der Wärmeverlust beträgt demnach nur 4° C.

Die innenseitige Isolierung der Fluidleitung/Wasserleitung hat den Vorteil, dass an die Fluidleitung keine besonderen Anforderungen bezüglich Dichtigkeit gestellt werden müssen. Diese Aufgabe kann die Innenisolierung übernehmen.

Die Fluidleitung (W) kann entsprechend innenseitig zur thermischen Isolierung zumindest abschnittweise mit einem Isolierschlauch ausgebildet werden. Die Fluidleitung kann wandseitig Öffnungen aufweisen, wobei der Ausströmbereich dann durch den Verlauf der innenseitigen Isolierung definiert wird.

Mit anderen Worten: Je nachdem, bis zu welchem Abschnitt die Fluidleitung innenseitig isoliert wird, ergibt sich die Möglichkeit, die Flüssigkeit an unterschiedlichen Stellen der Fluidleitung seitlich oder in Strömungsrichtung (insbesondere endseitig) austreten zu lassen. Zu diesem Zweck kann die Fluidleitung beispielsweise auch aus einem Lochblech hergestellt sein.

Die innere Isolierung, beispielsweise über einen Isolierschlauch, hat weiters den Vorteil, dass die Isolierung auch nachträglich eingezogen werden kann. Damit ist eine Nachrüstung bestehender Anlagen möglich. Ebenso kann ein Austausch/eine Reparatur von außen erfolgen, ohne den Pufferspeicher demontieren zu müssen.

Im Normalfall wird der Isolierschlauch beziehungsweise eine entsprechende innenseitige Isolierschicht durch Haftreibung an der Innenwand der Fluidleitung gehalten. Es kann aber auch eine zusätzliche Verklebung oder sonstige Befestigung erfolgen.

## Patentansprüche

1. Pufferspeicher mit Zonen (A, B, C) zur Speicherung von Wasser unterschiedlicher Temperatur, wobei mindestens eine thermisch isolierte Fluidleitung (W) durch mindestens zwei Zonen (A, B, C) des Pufferspeichers geführt ist, **dadurch gekennzeichnet dass** die Fluidleitung innenseitig thermisch isoliert ist.

2. Pufferspeicher nach Anspruch 1, bei dem die Fluidleitung (W) aus Stahl besteht.

3. Pufferspeicher nach Anspruch 1, bei dem die Fluidleitung (W) mit einem Kunststoffmaterial thermisch isoliert ist.

4. Pufferspeicher nach Anspruch 1, bei dem die Fluidleitung (W) mit einem Material thermisch isoliert, dass sich bei einer Durchflussmenge zwischen 0,1 und 5 1/min durch die Fluidleitung (W) und einer Gesamtlänge der thermisch isolierten Fluidleitung (W) im Pufferspeicher zwischen 1 und 2 m ein Temperaturverlust von maximal 5° C ergibt.

5. Pufferspeicher nach Anspruch 1, bei dem die Fluidleitung (W) mit einem Material thermisch isoliert, dass sich bei einer Durchflussmenge zwischen 0,1 und 5 1/min durch die Fluidleitung (W) und einer Gesamtlänge der thermisch isolierten Fluidleitung (W) im Pufferspeicher zwischen 1 und 2 m ein Temperaturverlust von maximal 4° C ergibt.

6. Pufferspeicher nach Anspruch 1, bei dem die Fluidleitung (W) mit einem Material thermisch isoliert, dass sich bei einer Durchflussmenge zwischen 0,1 und 5 1/min durch die Fluidleitung (W) und einer Gesamtlänge der thermisch isolierten Fluidleitung (W) im Pufferspeicher zwischen 1 und 2 m ein Temperaturverlust von maximal 2° C ergibt.

7. Pufferspeicher nach Anspruch 1, bei dem die Fluidleitung (W) innenseitig zur thermischen Isolierung zumindest abschnittweise mit einem Isolierschlauch ausgebildet ist.

8. Pufferspeicher nach Anspruch 1, bei dem die Fluidleitung (W) wandseitig Öffnungen aufweist.

## Claims

1. Buffer storage tank with zones (A, B, C) for storing water at different temperatures, wherein at least one thermally insulated fluid pipe (W) is guided through at least two zones (A, B, C) of the buffer storage tank, **characterised in that** the fluid pipe is thermally insulated on the inside.

2. Buffer storage tank according to Claim 1, in which the fluid pipe (W) consists of steel.

3. Buffer storage tank according to Claim 1, in which the fluid pipe (W) is thermally insulated with a plastic material.

4. Buffer storage tank according to Claim 1, in which the fluid pipe (W) is thermally insulated with a material which, given a flow rate between 0.1 and 5 l/m through the water pipe (W) and an overall length of the thermally insulated water pipe (W) in the buffer storage tank of between 1 and 2 m, results in a temperature loss of maximum 5°C.

5. Buffer storage tank according to Claim 1, in which the fluid pipe (W) is thermally insulated with a material which, given a flow rate between 0.1 and 5 l/m through the water pipe (W) and an overall length of the thermally insulated water pipe (W) in the buffer storage tank of between 1 and 2 m, results in a temperature loss of maximum 4°C.

6. Buffer storage tank according to Claim 1, in which the fluid pipe (W) is thermally insulated with a material which, given a flow rate between 0.1 and 5 l/m through the water pipe (W) and an overall length of the thermally insulated water pipe (W) in the buffer storage tank of between 1 and 2 m, results in a temperature loss of maximum 2°C.

7. Buffer storage tank according to Claim 1, in which the fluid pipe (W) is internally constructed for thermal insulation at least in sections with an insulating hose.

8. Buffer storage tank according to Claim 1, in which the fluid pipe (W) has openings along its wall.

## Revendications

1. Réservoir d'accumulation avec des zones (A, B, C) pour le stockage d'eau de différentes températures, dans lequel au moins une conduite de fluide (W) thermiquement isolée est guidée par au moins deux zones (A, B, C) du réservoir d'accumulation, **caractérisé en ce que** la conduite de fluide est thermiquement isolée du côté intérieur.

2. Réservoir d'accumulation selon la revendication 1, dans lequel la conduite de fluide (W) est constituée d'acier.

3. Réservoir d'accumulation selon la revendication 1, dans lequel la conduite de fluide (W) est thermiquement isolée avec une matière plastique.

4. Réservoir d'accumulation selon la revendication 1, dans lequel la conduite de fluide (W) est thermiquement isolée avec un matériau, où une perte de température de 5°C au maximum apparaît dans le réservoir d'accumulation avec un débit de 0,1 à 5 l/min à travers la conduite de fluide (W), et une longueur totale entre 1m et 2m pour la conduite de fluide (W) thermiquement isolée.

5. Réservoir d'accumulation selon la revendication 1, dans lequel la conduite de fluide (W) est thermiquement isolée avec un matériau, où une perte de température de 4°C au maximum apparaît dans le réservoir d'accumulation avec un débit de 0,1 à 5 l/min à travers la conduite de fluide (W), et une longueur totale entre 1m et 2m pour la conduite de fluide (W) thermiquement isolée.

6. Réservoir d'accumulation selon la revendication 1, dans lequel la conduite de fluide (W) est thermiquement isolée avec un matériau, où une perte de température de 2°C au maximum apparaît dans le réservoir d'accumulation avec un débit de 0,1 à 5 l/min à travers la conduite de fluide (W), et une longueur totale entre 1m et 2m pour la conduite de fluide (W) thermiquement isolée.

7. Réservoir d'accumulation selon la revendication 1, dans lequel la conduite de fluide (W) est conçue du côté intérieur, pour l'isolation thermique, au moins par sections, avec un tube isolant.

8. Réservoir d'accumulation selon la revendication 1, dans lequel la conduite de fluide (W) comporte des ouvertures côté paroi.
